(19) Europäisches Patentamt

European Patent Office

Office européen des brevets

(11) **EP 4 468 016 A1**

(12) **EUROPEAN PATENT APPLICATION**

(43) Date of publication:
**27.11.2024 Bulletin 2024/48**

(21) Application number: **23175540.6**

(22) Date of filing: **26.05.2023**

(51) International Patent Classification (IPC):
**G01S 5/00** (2006.01)   **G01S 5/02** (2010.01)

(52) Cooperative Patent Classification (CPC):
**G01S 5/0036; G01S 5/0072; G01S 5/0205;**
G01S 2205/01

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Robert Bosch GmbH
70442 Stuttgart (DE)**

(72) Inventors:
- **Hassan, Khaled Shawky
  31157 Sarstedt (DE)**
- **Jornod, Guillaume
  10243 Berlin (DE)**
- **Stark, Maximilian
  20249 Hamburg (DE)**

(54) **METHOD OF PROVIDING ORIENTATION INFORMATION OF A RADIO NODE OF A RADIO NETWORK**

(57)    A method (100) of providing orientation information of a radio node (12) of a radio network, the radio node (12) comprising an aperture with at least two spatially separated antenna units (14), wherein the method (100) comprises:
- Reading out (130), by the radio node (12), an orientation information representing an orientation of each of the at least two antenna units (14) of the aperture with respect to a coordinate system assigned to the radio node (12); and
- Transmitting (140), by the radio node (12), a signal (S3) comprising the read-out orientation information to provide the orientation information to a further radio node and/or to a location management function entity (16) of the radio network.

Fig. 2

EP 4 468 016 A1

**Description**

The invention concerns a method of providing orientation information of a radio node of a radio network, and a corresponding method of receiving orientation information of a radio node of a radio network, wherein the radio node comprises an aperture with at least two spatially separated antenna units. Further, the invention concerns a radio node, a network entity, a computer program, and a non-transitory computer readable medium.

Background

Positioning over radio-waves is a well-known approach. For example, GNSS systems are used for global navigation services, UWB positioning is widely used to localize and track objects, cellular communication networks can localize phones in case of an emergency etc. Most of these systems rely on so-called time-of-flight or time-of-arrival methods. In these systems, anchor nodes transmit a known reference signal, and the target node measures the time between transmission and reception. If a sufficient number of anchors is involved, the individual ranges can be converted into a position in x,y,z coordinates. This approach is called triangulation. Different variants to determine the range exist, e.g., different approaches, where a user equipment (UE) is located by multiple base stations (gNB). For locating UEs by multiple gNB, tight synchronization requirements exist such that the time difference of arrival (TDoA) can be determined precisely and converted into a physical distance. In addition to multiple range measurements, the number of unknowns in the positioning task can also be reduced by considering angular measurements.

In 5G positioning, angular methods are supported for the network-based positioning. I.e., in Rel. 16 and Rel. 17 NR-based positioning including UL-AoA and DL-AoD where introduced. By using a linear antenna array the angle of incident of a wavefront can be determined by measuring the phase offsets of the radio-waves received at each antenna. In addition to a linear antenna array, this idea can be also applied to 2D antenna apertures. In this case the azimuth and elevation angle can be determined. As a result, the time-of-flight and two angles can be determined already using only one target and one anchor considering angular methods.

For linear antenna arrays, the angular resolution depends on the number of antennas. In general, the angular resolution $\Delta\Theta$ for the wavelength $\lambda_0$ can be computed as

$$\Delta\Theta = 1.22\,\lambda_0/\mathrm{L}$$

where L is the size of the aperture and is often modeled as $N \cdot d$. Where N is the number of antennas and d is the antenna spacing.

Disclosure of the invention

According to a first aspect, there is provided a method of providing orientation information of a radio node of a radio network, the radio node comprising an aperture with at least two spatially separated antenna units.

The method according to the first aspect comprises:

- Reading out, by the radio node, an orientation information representing an orientation of each of the at least two antenna units of the aperture with respect to a coordinate system assigned to the radio node; and
- Transmitting, by the radio node, a signal comprising the read-out orientation information to provide the orientation information to a further radio node and/or to a location management function entity of the radio network.

The aperture comprised by the radio node can be understood as a system comprising the at least two spatially separated antenna units, i.e., as a spatially distributed antenna system. The at least two antenna units are arranged at the radio node with a defined distance between them. As an example, the distance between the at least two radio nodes may be greater, preferably 10 times or a hundred times greater than the size of the antenna units. The antenna units of the aperture may be arranged on different sides of the radio node or of a vehicle comprising the radio node. Particularly, the aperture is arranged in a defined or predetermined position and/or orientation at the radio node. Each of the antenna units may comprise or consist of a panel antenna.

The coordinate system assigned to the radio node can be understood as a coordinate system fixed to the radio node, specifically to a vehicle comprising the radio node. The axes of the coordinate system may be aligned with a length axis, width axis, and height axis of the radio node or the vehicle. Consequently, the coordinate system assigned to the radio node may be a vehicle coordinate system. The orientation may be indicated by providing respective values of Euler angles for each of the antenna units with respect to the coordinate system assigned to the radio node. The orientation information can be read out from a storage unit assigned to or comprised by the radio node.

The location management function entity can be preferably understood as a network entity hosting a location management function, particularly as specified in 3GPP TS 29.572. The further radio node may be a serving user equipment.

According to a second aspect, there is provided a method receiving orientation information of a radio node of a radio network, the radio node comprising an aperture with at least two spatially separated antenna units. Here, the method comprises receiving, by a further radio node and/or a location management function entity of the radio network, a signal transmitted by the radio node. The received signal comprises an orientation information representing an orientation of each of the at least two antenna units of the aperture with respect to a coordinate system assigned to the radio node.

According to a third aspect, there is provided a radio node. The radio node comprises an aperture with at least two spatially separated antenna units, a non-transitory computer readable medium comprising machine-readable instructions, and a processor configured to load and to execute the machine-readable instructions to cause the first radio node to execute the method according to the first and/or the second aspect, or its embodiments.

According to a fourth aspect, there is provided a network entity. The network entity comprises a non-transitory computer readable medium comprising machine-readable instructions, and a processor configured to load and to execute the machine-readable instructions to cause the network entity node to execute the method according to the second aspect, or its embodiments. The network entity is preferably a location management function entity hosting the location management function.

According to a fifth aspect, there is provided a computer program comprising machine-readable instructions to cause

- the radio node as defined by the third aspect to execute the steps of the method according to the first aspect and/or the second aspect, and/or
- the network entity as defined by the fourth aspect to execute the steps of the method according to the second aspect.

According to a sixth aspect, there is provided a non-transitory computer readable medium having stored thereon the computer program as defined by the fifth aspect.

The signals transmitted by the radio node and/or the further radio node and/or the location management function entity may be transmitted via a radio access network of the radio network and/or a sidelink channel of the radio network.

The introduced methods allow to improve angle of arrival positioning by enabling reporting mechanisms for large, spatially distributed apertures, i.e., distributed antenna systems. Particularly, the potential for increasing accuracy of positioning measurements when arranging multiple spatially separated antenna units, e.g., on a vehicle, is leveraged by providing orientation information for each of the antenna units of the radio node, preferably using the proposed aperture orientation report container.

In other words, as a summary, this invention provides a solution for reporting time and/or angle based positioning measurements per antenna unit of a radio node with a spatially distributed antenna system, associating the positioning measurements uniquely with a respective antenna unit, reporting shape, form factor, antenna position and geometry of the radio node with the spatially distributed antenna system, and providing an orientation information of the entire distributed aperture to determine the location of the aperture in a local or global reference coordinate system.

According to an embodiment of the first aspect, the method further comprises a step of transmitting, by the radio node, a positioning signal comprising a positioning information for each of the at least two antenna units and/or further orientation information representing an orientation of the radio node with respect to a coordinate system independent from the radio node. Here, the further orientation information comprised by the positioning signal preferably represents the orientation of the radio node in a coordinate system independent from the radio node, e.g., a global coordinate system or a coordinate system assigned to the further radio node.

According to an embodiment of the first aspect, in the step of reading out a relative position information representing a relative position of each of the at least two antenna units is read out and the transmitted signal further comprises the read-out relative position information for each of the at least two antenna units. The relative position can be a position of a reference point of each of the antenna units of the aperture relative to a defined refence point of the radio node or the aperture respectively. The defined reference point of the antenna unit may be a so-called antenna reference point. The defined reference point of the radio node may be a so-called aperture reference point, preferably fixed in a coordinate system assigned or attached to the first radio node. The relative position information preferably comprises relative coordinates of the reference points of each of the antenna units.

According to an embodiment of the first aspect, the transmitted signal further comprises an antenna unit identification information for each of the at least two antenna units to assign the orientation information and/or relative position information to the respective antenna unit. The antenna unit identification information may consist of an antenna unit ID for each of the at least two antenna units.

According to an embodiment of the first aspect, the method further comprises a step of receiving, by the radio node, a signal transmitted from the further radio node and/or the location management function entity, wherein the received signal comprises the antenna unit identification information for each of the at least two antenna units. I.e., the antenna unit identification information is provided by the further radio node and/or the location management function entity. As an example, the received signal may comprise a list of IDs, which are preferably assigned by the radio node to the antenna units, e.g., according to a defined or predetermined procedure.

According to an embodiment of the first aspect, the method further comprises a step of transmitting, by the radio node, a request signal to the further radio node and/or the location management function entity, wherein the request signal comprises a request for the antenna unit identification information for each of the at least two antenna units. I.e., a list of IDs may be requested by the radio node from the further radio node and/or the location management function entity.

According to an embodiment of the first aspect, the request signal comprises a number of antenna units of the radio node. Preferably, the number of antenna IDs transmitted to the radio node is identical to the number of antenna units of the radio node.

According to an embodiment of the first aspect, in the step of reading out a bounding box information representing a bounding box of the radio unit is read out and the transmitted signal further comprises the read-out bounding box information. The bounding box information preferably comprises dimensions of the bounding box, specifically length and/or width and/or height of the bounding box, and/or a position of a bounding box reference point and/or an orientation of the bounding box with respect to the coordinate system assigned to the radio node. The position of the bounding box reference point can be a position of the bounding box reference point relative to a defined refence point of the radio node, particularly to the aperture reference point.

According to an embodiment of the second aspect, the method further comprises a step of transmitting, by the further radio node and/or the location management function entity of the radio network, a signal comprising antenna unit identification information for each of the at least two antenna units of the radio node. I.e., the antenna unit identification information is provided by the further radio node and/or the location management function entity. As an example, the transmitted signal may comprise a list of IDs, which are preferably assigned by the radio node to the antenna units.

According to an embodiment of the second aspect, the method further comprises a step of receiving, by the further radio node and/or the location management function entity of the radio network, a request signal transmitted by the radio node, wherein the request signal comprises a request for the antenna unit identification information for each of the at least two antenna units and the signal comprising the antenna unit identification information is transmitted to the radio node in response to the received request signal. I.e., a list of IDs may be requested by the radio node from the further radio node and/or the location management function entity. Preferably, the number of antenna IDs transmitted to the radio node is identical to the number of antenna units of the radio node.

According to an embodiment of the second aspect, the method further comprises a step of receiving, by the further radio node and/or the location management function entity of the radio network, a positioning signal comprising a positioning information for each of the at least two antenna units of the aperture and/or a further orientation information representing an orientation of the radio node with respect to a coordinate system independent from the radio node.

According to an embodiment of the second aspect, the method further comprises a step of determining, by the further radio node and/or the location management function entity of the radio network, a position and/or orientation of the radio node, preferably of the at least two antenna units of the aperture, with respect to the coordinate system independent from the radio node based on the received positioning signal and the received signal, which comprises the orientation information of each of the at least two antenna units of the aperture with respect to the coordinate system assigned to the radio node. As an example, the orientation of the at least two antenna units of the aperture with respect to a coordinate system independent from the radio node, e.g., a global coordinate system, may be determined based on the position of the radio node with respect to this coordinate system and the orientation of the at least two antenna units with respect to a coordinate system assigned to the radio node.

According to an embodiment, the radio node according to the third aspect and/or the network entity according to the fourth aspect are members of a 5G NR network. The radio node may be a user equipment. Specifically, the radio node may be comprised by a vehicle. The radio node may support device to device, internet of things, and/or V2X communications, particularly according to a 3GPP standard. The network entity may be a core network element, an edge computing element, a base station, or a user equipment.

The non-transitory computer readable medium is preferably configured to store the computer program to be executed by a processor of the radio node and/or the network entity. The non-transitory computer readable media may include RAM, ROM, EEPROM, and any other non-volatile storage device.

Description of the figures

Exemplary embodiments of the present invention are depicted in the figures, which are not to be construed as limiting the claims, and are explained in greater detail below.

Fig. 1A,B,C     schematically show a vehicle comprising a radio node according to the third aspect; and

Fig. 2        schematically illustrates methods according to the first and the second aspect.

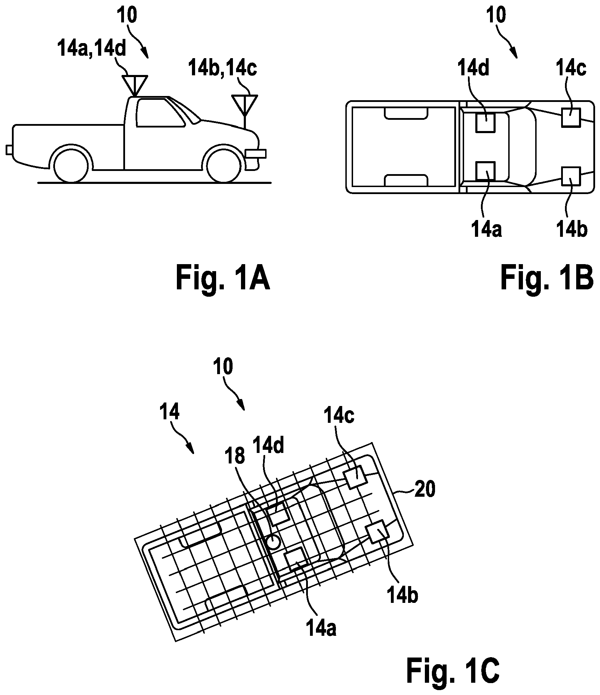

Fig. 1A,B,C schematically show different views of a vehicle comprising a radio node according to the third aspect.

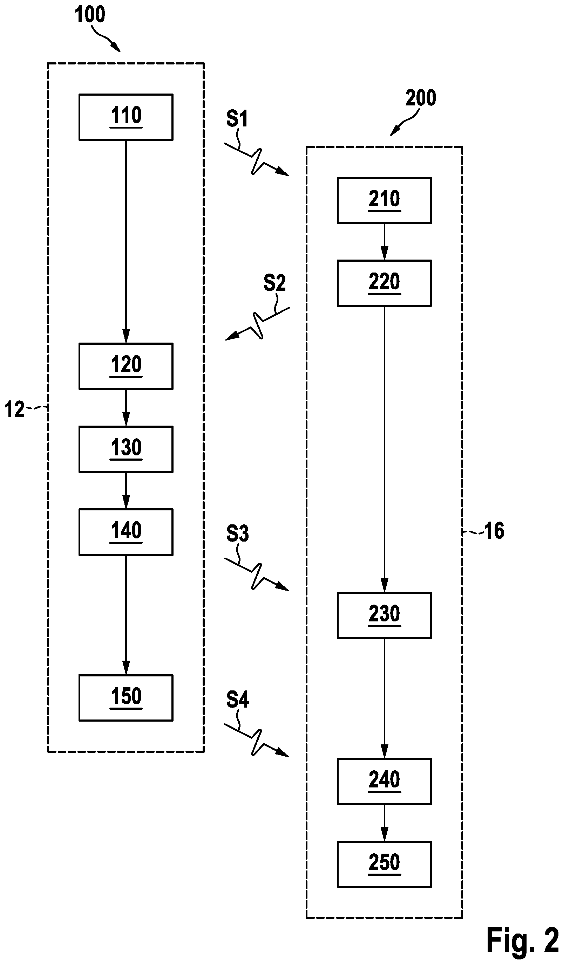

According to this embodiment, the vehicle 10 is a passenger car equipped with a radio node 12. The radio node 12 comprises four antenna units 14a, 14b, 14c, 14d, collectively denoted with the reference sign 14. Further, the radio node 12 comprises a non-transitory computer readable medium comprising machine-readable instructions, and a processor configured to load and to execute the machine-readable instructions to cause the radio node 12 to execute the method according to first aspect, as further described in Fig. 2.

Specifically, Fig. 1A shows a side view on the vehicle 10. Both Fig. 1B and Fig. 1C show a top view on the vehicle 10. Here, Fig. 1C additionally indicates a so-called aperture reference point 18, i.e., a reference point in a coordinate system assigned or attached to the vehicle 10, and a bounding box 20 of the vehicle 10. The bounding box 20 represents or approximates the outer geometry of the vehicle 10.

Fig. 2 schematically illustrates methods according to the first and the second aspect.

According to a first aspect of the invention, there is provided a method 100 of providing orientation information of a radio node 12 of a radio network, the radio node comprising an aperture with at least two spatially separated antenna units 14. According to the second aspect of the invention, there is provided a corresponding method 200 of receiving orientation information of a radio node 12 of a radio network, the radio node 12 comprising an aperture with at least two spatially separated antenna units 14.

The method 100 comprises a step 110 of transmitting, by the radio node 12, a request signal S1 to the further radio node 14 and/or the location management function entity 16, wherein the request signal S1 comprises a request for the antenna unit identification information for each of the at least two antenna units 14 of the aperture.

The method 200 comprises a step 210 of receiving, by the further radio node 16 and/or the location management function entity 16 of the radio network, the request signal S1 transmitted by the radio node 12, wherein the request signal S1 comprises the request for the antenna unit identification information for each of the at least two antenna units 14 of the aperture.

The method 200 comprises a step 220 of transmitting, by the further radio node 16 and/or the location management function entity 16 of the radio network, a signal S2 comprising the requested antenna unit identification information for each of the at least two antenna units 16 of the radio node 12. Here, the signal S2 comprising the antenna unit identification information is transmitted to the radio node 12 in response to the received request signal S1.

The method 100 comprises a step 120 of receiving, by the radio node 12, the signal S2 transmitted from the further radio node 16 and/or the location management function entity 16, wherein the received signal S2 comprises the antenna unit identification information for each of the at least two antenna units 14 of the aperture.

The method 100 comprises a step 130 of reading out, by the radio node 12, an orientation information representing an orientation of each of the at least two antenna units 16 with respect to a coordinate system assigned to the radio node.

Additionally, a relative position information representing a relative position of each of the at least two antenna units 16 and a bounding box information representing a bounding box of the radio unit 12 are read out. Preferably, the relative position and the bounding box information is also represented in coordinates of the coordinate system assigned to the radio node.

The method 100 comprises a step 140 of transmitting, by the radio node 12, a signal S3 comprising the read-out orientation information, relative position information and bounding box information to provide the information to the further radio node 16 and/or to a location management function entity 16 of the radio network.

Preferably, the signal S3 comprises a message container comprising for each of the antenna units 14 of the aperture the respective antenna unit identification information, the relative position of the respective antenna unit reference point, and the orientation of the respective antenna unit.

An an example, a message container as follows may be used to provide a geometry information of the aperture of the radio node 12 with the at least two antenna units 14:

```
{"Ap_Info":
"Antenna_Info":
[
        {"Antenna ID": Antenna_ID,
              "Antenna Reference Point":
                     {"ARP_x" : ARP_x,
                      "ARP_y" : ARP_y,
                      "ARP_z": ARP_z,
                      "ARP_orientation": Euler Angles for respective Antenna}
        }
]
"Bounding_Box_Information:
        {"BB_length": BB_length
```

```
"BB_width": BB_width
"BB_height": BB_height
"BB_x_offset": BB_x_offset
"BB_y_offset": BB_y_offset
"BB_z_offset": BB_z_offset}
    }
```

The method 200 comprises a step 230 of receiving, by the further radio node 16 and/or a location management function entity 16 of the radio network, the signal S3 transmitted by the radio node 12.

The steps 110, 120, 130, 140 of the method 100 and/or the steps 210, 220, 230 of the method are preferably carried out, specifically once, during a user equipment capability exchange of the radio node 12, e.g., in a discovery phase, as part of a sidelink positioning initialization request or other requests.

The method 100 comprises a step 150 of transmitting, by the radio node 12, a positioning signal S4 comprising a positioning information for each of the at least two antenna units 14 and/or a further orientation information representing an orientation of the radio node 12 with respect to a coordinate system independent from the radio node 12.

The method 200 comprises a step of receiving, by the further radio node and/or the location management function entity of the radio network, the positioning signal transmitted by the radio node 12.

As an example, for the sidelink positioning procedure, sidelink positioning measurements are exchanged per antenna unit and reported in a respective message container. Preferably this message container is supplemented by an orientation information for the aperture, in particular to indicate the orientation information for the aperture, i.e., the radio node 12, in a coordinate system independent from the radio node 12. For this purpose, a message container as follows may be used:

```
{"ARP_SL_measurement":
"per ARP Measurements":
}
{"Antenna_Aperture_Orientation": Euler Angles for Aperture / Radio Node
}
```

The antenna reference point (ARP) measurements depend on the capabilities of the respective antenna unit. Generally, both timing-based positioning methods as well as angular-positioning based methods may be supported. E.g., if an antenna unit has multiple antenna elements, angle of arrival based positioning measurements can be conducted and reported for each of the antenna units.

The method 200 comprises a step 250 of determining, by the further radio node and/or the location management function entity of the radio network, a position and/or orientation of the radio node, preferably of the at least two antenna units of the aperture, with respect to a coordinate system independent from the radio node based on the received positioning signal and the received signal comprising the orientation information.

Preferably, the execution of the methods 100, 200 is continued by carrying out steps 150, 240, and 250 repeatedly, specifically in the sequence 150, 240, 250.

The examples provided in the drawings and described in the foregoing written description are intended for providing an understanding of the principles of this specification. No limitation to the scope of the appended claims is intended thereby. The present specification describes alterations and modifications to the illustrated examples. Only the preferred examples have been presented, and all changes, modifications, and further applications to these within the scope of the specification are desired to be protected.

## Claims

1.   A method (100) of providing orientation information of a radio node (12) of a radio network, the radio node (12) comprising an aperture with at least two spatially separated antenna units (14), wherein the method (100) comprises:

- Reading out (130), by the radio node (12), an orientation information representing an orientation of each of the at least two antenna units (14) of the aperture with respect to a coordinate system assigned to the radio node (12); and
- Transmitting (140), by the radio node (12), a signal (S3) comprising the read-out orientation information to provide the orientation information to a further radio node and/or to a location management function entity (16) of the radio network.

2.   The method (100) according to claim 1, further comprising a step of transmitting (150), by the radio node (12), a positioning signal (S4) comprising a positioning information for each of the at least two antenna units (14) of the aperture and/or a further orientation information representing an orientation of the radio node (12) with respect to a coordinate system independent from the radio node (12).

3. The method (100) according to claim 1 or 2, wherein in the step of reading out (130) a relative position information representing a relative position of each of the at least two antenna units (14) of the aperture is read out and the transmitted signal (S3) further comprises the read-out relative position information for each of the at least two antenna units (14).

4. The method (100) according to one of the preceding claims, wherein the transmitted signal (S3) further comprises an antenna unit (14) identification information for each of the at least two antenna units (14) of the aperture to assign the orientation information and/or relative position information to the respective antenna unit (14).

5. The method (100) according to claim 4, further comprising a step of receiving (120), by the radio node (12), a signal (S2) transmitted from the further radio node and/or the location management function entity (16), wherein the received signal (S2) comprises the antenna unit (14) identification information for each of the at least two antenna units (14) of the aperture.

6. The method (100) according to claim 4 or 5, further comprising a step of transmitting (110), by the radio node (12), a request signal (S1) to the further radio node and/or the location management function entity (16), wherein the request signal (S1) comprises a request for the antenna unit (14) identification information for each of the at least two antenna units (14) of the aperture.

7. The method (100) according to claim 6, wherein the request signal (S1) comprises a number of antenna units (14) of the aperture.

8. The method (100) according to one of the preceding claims, wherein in the step of reading out (130) a bounding box information representing a bounding box of the radio unit is read out and the transmitted signal (S3) further comprises the read-out bounding box information.

9. A method (200) of receiving orientation information of a radio node (12) of a radio network, the radio node (12) comprising an aperture with at least two spatially separated antenna units (14), wherein

- the method (200) comprises receiving (230), by a further radio node and/or a location management function entity (16) of the radio network, a signal (S3) transmitted by the radio node (12), and
- the received signal (3S) comprises an orientation information representing an orientation of each of the at least two antenna units (14) of the aperture with respect to a coordinate system assigned to the radio node (12).

10. The method (200) according to claim 9, further comprising a step of transmitting (220), by the further radio node and/or the location management function entity (16) of the radio network, a signal (S2) comprising antenna unit (14) identification information for each of the at least two antenna units (14) of the radio node (12).

11. The method (200) according to claim 10, further comprising a step of receiving (210), by the further radio node and/or the location management function entity (16) of the radio network, a request signal (S1) transmitted by the radio node (12), wherein the request signal (S1) comprises a request for the antenna unit (14) identification information for each of the at least two antenna units (14) of the aperture and the signal (S2) comprising the antenna unit (14) identification information is transmitted to the radio node (12) in response to the received request signal (S1).

12. The method (200) according to one of claims 9 to 11, further comprising a step of receiving (240) by the further radio node and/or the location management function entity (16) of the radio network, a positioning signal (S4) comprising a positioning information for each of the at least two antenna units (14) of the aperture and/or a further orientation information representing an orientation of the radio node (12) with respect to a coordinate system independent from the radio node (12).

13. The method (200) according to claim 12, further comprising a step of determining (250), by the further radio node and/or the location management function entity (16) of the radio network, a position and/or orientation of the radio node (12), preferably of the at least two antenna units (14) of the aperture, with respect to the coordinate system independent from the radio node (12) based on the received positioning signal (S4) and the received signal (S3), which comprises the orientation information of each of the at least two antenna units (14) of the aperture with respect to the coordinate system assigned to the radio node (12).

14. A radio node (12), comprising

   - at least two antenna units (14),
   - a non-transitory computer readable medium comprising machine-readable instructions, and
   - a processor configured to load and to execute the machine-readable instructions to cause the radio node (12) to execute the method (100) according to one of claims 1 to 8 and/or the method (200) according to one of claims 9 to 13.

15. A network entity (16), comprising

   - a non-transitory computer readable medium comprising machine-readable instructions, and
   - a processor configured to load and to execute the machine-readable instructions to cause the network entity (16) to execute the method (200) according to one of claims 9 to 13.

16. A computer program comprising machine-readable instructions to cause

   - the radio node (12) of claim 14 execute the method (100) according to one of claims 1 to 8 and/or the method (200) according to one of claims 9 to 13, and/or
   - the network entity (16) of claim 15 to execute the method (200) according to one of claims 9 to 13.

17. A non-transitory computer readable medium having stored thereon the computer program of claim 16.

Fig. 1A

Fig. 1B

Fig. 1C

100

110

S1

200

210

220

12

120

130

140

S3

230

16

150

S4

240

250

S2

Fig. 2

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2022/082144 A2 (QUALCOMM INC [US]) 21 April 2022 (2022-04-21) <br> * figures 3A-3C, 5, 6, 8A-9 * <br> * claims 1, 10-14, 20, 22, 23, 30, 62 * <br> * paragraphs [0006] – [0007] * <br> * paragraphs [0112] – [0130] * <br> * paragraphs [0147] – [0150] * <br> ----- | 1-17 | INV. <br> G01S5/00 <br> G01S5/02 |
| X | US 2018/217613 A1 (JIANG LIBIN [US] ET AL) 2 August 2018 (2018-08-02) <br> * figures 8A-9, 11, 12 * <br> * claims 1-7 * <br> * paragraphs [0066] – [0080] * <br> * paragraphs [0085] – [0104] * <br> ----- | 1-17 | |
| X | US 2019/221110 A1 (VANDERVEEN MICHAELA [US] ET AL) 18 July 2019 (2019-07-18) <br> * figures 1-2B, 5, 9-11 * <br> * paragraphs [0068] – [0081] * <br> * paragraphs [0113] – [0120] * <br> ----- | 1-17 | |
| X | US 2020/163043 A1 (SCHMIDT ANDREAS [DE] ET AL) 21 May 2020 (2020-05-21) <br> * figure 2 * <br> * paragraphs [0080] – [0096] * <br> * paragraphs [0114] – [0134] * <br> ----- | 1-17 | TECHNICAL FIELDS SEARCHED (IPC) <br><br> G01S |
| X | US 2022/386093 A1 (BAEK JONGSEOB [KR] ET AL) 1 December 2022 (2022-12-01) <br> * figures 13, 14 * <br> * paragraphs [0190] – [0290] * <br> ----- | 1-17 | |

The present search report has been drawn up for all claims

| Place of search | Date of completion of the search | Examiner |
|---|---|---|
| Munich | 7 November 2023 | Krummenacker, Benoit |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

...................................................................
& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 23 17 5540

This annex lists the patent family members relating to the patent documents cited in the above-mentioned European search report.
The members are as contained in the European Patent Office EDP file on
The European Patent Office is in no way liable for these particulars which are merely given for the purpose of information.

07-11-2023

| Patent document cited in search report | | | Publication date | Patent family member(s) | | | Publication date |
|---|---|---|---|---|---|---|---|
| WO 2022082144 | A2 | | 21-04-2022 | BR | 112023006323 | A2 | 09-05-2023 |
| | | | | CN | 116490793 | A | 25-07-2023 |
| | | | | EP | 4229425 | A2 | 23-08-2023 |
| | | | | JP | 2023545997 | A | 01-11-2023 |
| | | | | KR | 20230085143 | A | 13-06-2023 |
| | | | | TW | 202218446 | A | 01-05-2022 |
| | | | | WO | 2022082144 | A2 | 21-04-2022 |
| US 2018217613 | A1 | | 02-08-2018 | CN | 110312948 | A | 08-10-2019 |
| | | | | EP | 3577493 | A1 | 11-12-2019 |
| | | | | TW | 201830047 | A | 16-08-2018 |
| | | | | US | 2018217613 | A1 | 02-08-2018 |
| | | | | WO | 2018144187 | A1 | 09-08-2018 |
| US 2019221110 | A1 | | 18-07-2019 | CN | 111566501 | A | 21-08-2020 |
| | | | | EP | 3737959 | A1 | 18-11-2020 |
| | | | | US | 2019221110 | A1 | 18-07-2019 |
| | | | | US | 2021110707 | A1 | 15-04-2021 |
| | | | | US | 2022398919 | A1 | 15-12-2022 |
| | | | | WO | 2019140234 | A1 | 18-07-2019 |
| US 2020163043 | A1 | | 21-05-2020 | BR | 112019025196 | A2 | 23-06-2020 |
| | | | | CN | 110786056 | A | 11-02-2020 |
| | | | | EP | 3643126 | A1 | 29-04-2020 |
| | | | | ES | 2902333 | T3 | 28-03-2022 |
| | | | | JP | 7081756 | B2 | 07-06-2022 |
| | | | | JP | 2020524923 | A | 20-08-2020 |
| | | | | PL | 3643126 | T3 | 07-02-2022 |
| | | | | RU | 2020102440 | A | 22-07-2021 |
| | | | | US | 2020163043 | A1 | 21-05-2020 |
| | | | | WO | 2018234526 | A1 | 27-12-2018 |
| US 2022386093 | A1 | | 01-12-2022 | KR | 20220100600 | A | 15-07-2022 |
| | | | | US | 2022386093 | A1 | 01-12-2022 |
| | | | | WO | 2021096322 | A1 | 20-05-2021 |

EPO FORM P0459

For more details about this annex : see Official Journal of the European Patent Office, No. 12/82